# EUROPÄISCHE PATENTANMELDUNG

(11) **EP 3 309 126 A1**
(43) Veröffentlichungstag der Anmeldung: **18.04.2018**
(21) Anmeldenummer: 16193249.6
(22) Anmeldetag: 11.10.2016
(51) Int. Cl.: C01B 33/107, C07F 7/04, C01B 7/04

(54) **VERFAHREN ZUR HERSTELLUNG VON SILICIUMTETRACHLORID DURCH CARBOCHLORIERUNG**

(71) Anmelder: Evonik Degussa GmbH, 45128 Essen (DE)
(72) Erfinder: Uehlenbruck, Goswin, 61440 Oberursel (DE); Zoch, Heinz, 63477 Maintal (Dörnigheim) (DE); Rauleder, Hartwig, 79618 Rheinfelden (DE); Elsner, Jens, 65239 Hochheim a.Main (DE)

(57) **Zusammenfassung**

Die vorliegende Erfindung betrifft ein Verfahren zur Herstellung von Siliciumtetrachlorid in einem Anlagenverbund indem man
- in der Einheit (A) SiO₂ und Kohlenstoff mit Cl₂ bei einer Temperatur im Bereich von 700 bis 1600 °C umsetzt und das Umsetzungsprodukt fraktioniert kondensiert und SiCl₄ gewinnt,
- in der Einheit (B) das Chlorsilane-Gemisch mit einem Alkohol, vorzugsweise Methanol oder Ethanol, umsetzt (verestert), und dabei freigesetztes HCl(g) zumindest anteilig in Einheit (A) zurückführt,
- in Einheit (C) Chlorsilane-Gemisch mindestens unter Zusatz von Sauerstoff und/oder Luft verbrennt und Chlor-haltiges Gas in Einheit (A) zurückführt,
- in Einheit (D) die in den Einheiten (A), (B) und (C) anfallenden HCl-haltigen Gas- bzw. Abgasströme in Gegenwart eines Oxidationskatalysators unter Zusatz von Sauerstoff und/oder Luft einem Oxidationsschritt unterzieht, dabei Cl₂ gewinnt und das gewonnene Cl₂ zumindest anteilig in die Einheit (A) zurückführt.

## Beschreibung

Die vorliegende Erfindung betrifft ein Verfahren zur Herstellung von Siliciumetetrachlorid durch Carbochlorierung, wobei man spezielle Verfahrensschritte gezielt in einem Anlagenverbund betreibt.

Die Herstellung von Chlorsilanen, wie Trichlorsilan und Siliciumtetrachlorid, ist lange bekannt und kann beispielsweise durch die Umsetzung von metallurgischem Silicium mit HCl(g) bei höherer Temperatur erfolgen. Dabei ist von Nachteil, dass man Chlorsilane erhält, die 1 - 4 Wasserstoffliganden enthalten und zusätzlich elementarer Wasserstoff als Nebenprodukt entsteht.

2 Si + 7 HCl → SiCl₄ + HSiCl₃ + 3 H₂

Chlorsilane sind wichtige großtechnische Ausgangsverbindungen für die Herstellung von Organochlorsilanen, Alkoxysilanen sowie Organoalkoxysilanen. So werden beispielsweise durch Umsetzung von Trichlorsilan oder Siliciumtetrachlorid mit einem Alkohol, wie Methanol oder Ethanol, Hydrogentrimethoxysilan, Hydrogentrieethoxysilan oder Tetraethoxysilan hergestellt.

SiCl₄ + 4 EtOH → Si(OEt)₄ + 4 HCl

HSiCl₃ + 3 EtOH → HSi(OEt)₃ + 3 HCl

Ferner sind Chlorsilane wichtige Ausgangsverbindungen für die Produktion pyrogen oder durch Hydrolyse bzw. Fällung hergestellter Kieselsäure.

SiCl₄ + O₂ + E → SiO₂ + 2 Cl₂

SiCl₄ + 2 H₂ + O₂ + E → SiO₂ + 4 HCl

HSiCl₃ + O₂ + E → SiO₂ + HCl + Cl₂

SiCl₄ + 2 H₂O → SiO₂ + 4 HCl

SiCl₄ + 4 H₂O → SiO₂ x 2 H₂O + 4 HCl

SiCl₄ + 4 H₂O → Si(OH)₄ + 4 HCl

Auch sind Verfahren im Sinn der sogenannten Carbochlorierung bekannt, um Metallchloride zu gewinnen. Dazu kann man gemäß EP 0 034 897 eine Metallverbindung der Gruppen III, IV oder V des Periodensystems der Elemente, beispielsweise eine des B, Si, Ti, Zr, V, mit Kohlenstoffpartikeln und Chlor bei höherer Temperatur umsetzen und erhält entsprechende Metallchloride, wie BCl₃, SiCl₄, TiCl₄, ZrCl₄, VCl₅. Aufgrund der hohen Umsetzungstemperatur und einem raschen Abkühlungsvorgang liegt im Produktgemisch im Wesentlichen CO vor.

TiO₂ + 2 Cl₂ + 2 C → TiCl₄ + 2 CO

DE 1079015 lehrt die Herstellung von SiCl₄ durch Umsetzung von SiO₂, Kohlenstoff und Chlor im elektrischen Lichtbogen.

Beispielsweise beschreiben EP 0 167 156, JP 6043244 B2 sowie JP 6092250 B2 speziell die Umsetzung von SiO₂, Kohlenstoff und Chlor bei Temperaturen von 500 bis 1200 °C.

WO 2013/060863 offenbart ein Verfahren bei dem Gemische aus aufbereiteten, hochviskosen Kohlenstoffen und SiO₂ und/oder Silikate enthaltene Gesteinsmassen im Halogenwasserstoffstrom, wie HCl, erhitzt und dabei gebildetes SiCl₄ aufgefangen bzw. abdestilliert wird.

SiO₂ + 4 HCl + 2 C → SiCl₄ + 2 H₂ + 2 CO

Auch hier liegt aufgrund der hohen Umsetzungstemperatur und einem raschen Abkühlungsvorgang im Wesentlichen CO und elementarer Wasserstoff im Produktgasgemisch vor. Darüber hinaus ist von Nachteil, dass bei der Umsetzung Wasser entstehen kann und so zumindest partiell zur Hydrolyse des erzeugten Chlorsilans führt.

Der vorliegenden Erfindung lag die Aufgabe zugrunde, ein Verfahren zur Herstellung von SiCl₄, das im Wesentlichen frei von Wasserstoff ist und die bei der Weiterverarbeitung von SiCl₄ anfallende CI-Komponenten wieder im Herstellprozess für SiCl₄ genutzt werden können, wobei zuvor dargelegte Nachteile vermieden werden sollen.

Die gestellte Aufgabe wird erfindungsgemäß entsprechend den Angaben der Patentansprüche gelöst.

Zusätzlich wird ausdrücklich darauf hingewiesen, dass alle der nachfolgend aufgeführten Merkmale, Vorzugsbereiche und Querverweise auf weitere Dokumente jeweils miteinander kombinierbar und somit umfänglich offenbart sind sowie der vorliegen Offenbarung zuzurechnen sind.

Überraschenderweise wurde gefunden, dass man Siliciumtetrachlorid, das im Wesentlichen frei von Wasserstoff ist, besonders vorteilhaft in einem Anlagenverbund herstellen kann und man darüber hinaus bei der Herstellung anfallende Komponenten in besonders wirtschaftlicher Weise einer Wieder- bzw. Weiterverwertung zuführen kann indem man
- in der Einheit (A) SiO₂ und Kohlenstoff mit Cl₂ bei einer Temperatur im Bereich von 700 bis 1600 °C, vorzugsweise bei 800 bis 1500 °C, insbesondere bei 900 bis 1300 °C, umsetzt und das Umsetzungsprodukt fraktioniert kondensiert und SiCl₄ gewinnt,
- in der Einheit (B) das Chlorsilane-Gemisch mit einem Alkohol, vorzugsweise Methanol oder Ethanol, umsetzt (verestert), und dabei freigesetztes HCl(g) zumindest anteilig in Einheit (A) zurückführt,
- in Einheit (C) Chlorsilane-Gemisch mindestens unter Zusatz von Sauerstoff und/oder Luft verbrennt und Chlor-haltiges Gas in Einheit (A) zurückführt,
- in Einheit (D) die in den Einheiten (A), (B) und (C) anfallenden HCl-haltigen Gas- bzw. Abgasströme in Gegenwart eines Oxidationskatalysators unter Zusatz von Sauerstoff und/oder Luft einem Oxidationsschritt unterzieht, dabei Cl₂ gewinnt und das gewonnene Cl₂ zumindest anteilig in die Einheit (A) zurückführt.

Gegenstand der vorliegenden Erfindung ist somit ein Verfahren zur Herstellung von Siliciumtetrachlorid im Anlagenverbund indem man
- in der Einheit (A) SiO₂ und Kohlenstoff mit Cl₂ bei einer Temperatur im Bereich von 700 bis 1600 °C umsetzt und das Umsetzungsprodukt fraktioniert kondensiert und SiCl₄ gewinnt,
- in der Einheit (B) das Chlorsilane-Gemisch mit einem Alkohol, vorzugsweise Methanol oder Ethanol, umsetzt (verestert), und dabei freigesetztes HCl(g) zumindest anteilig in Einheit (A) zurückführt,
- in Einheit (C) Chlorsilane-Gemisch mindestens unter Zusatz von Sauerstoff und/oder Luft verbrennt und Chlor-haltiges Gas in Einheit (A) zurückführt,
- in Einheit (D) die in den Einheiten (A), (B) und (C) anfallenden HCl-haltigen Gas- bzw. Abgasströme in Gegenwart eines Oxidationskatalysators unter Zusatz von Sauerstoff und/oder Luft einem Oxidationsschritt unterzieht, dabei Cl₂ gewinnt und das gewonnene Cl₂ zumindest anteilig in die Einheit (A) zurückführt.

Bevorzugt setzt man beim erfindungsgemäßen Verfahren in Einheit (A) als Kohlenstoff Koks, Steinkohle, Braunkohle, Holzkohle, Aktivkohle und/oder Ruß ein.

Weiter setzt man beim erfindungsgemäßen Verfahren in Einheit (A) als SiO₂ vorteilhaft natürlichen oder synthetischen Quarz, Quarzglas, Quarzsand und/oder Kieselsäure einsetzt.

Dabei führt man beim erfindungsgemäßen Verfahren die Umsetzung gemäß Einheit (A) bevorzugt in einem Drehrohrofen, einem Schachtofen oder einer Wirbelschicht durch.

Weiter geht man beim erfindungsgemäßen Verfahren vorteilhaft so vor, dass man die in der Einheit (A) nach Kondensation erhaltene SiCl₄-Fraktion zumindest anteilig in die Einheit (B) und/oder die Einheit (C) überführt, wobei man die SiCl₄-Fraktion vor einer Weiterverarbeitung optional durch mindestens eine zusätzliche Destillation nachbehandeln kann.

Beim erfindungsgemäßen Verfahren geht man weiter vor, indem man vorzugsweise in Einheit (B) SiCl₄ mit einem Alkohol, vorzugsweise Ethanol, umsetzt (verestert), das Produktgemisch destilliert, Tetraethoxysilan gewinnt, Ethanol optional recycliert, HCl über die Gasphase aus dem System entfernt und der Einheit (D) zuführt.

Ferner führt man das erfindungsgemäßen Verfahren vorteilhaft durch, dass man in Einheit (C) einen aus Einheit (A) stammenden SiCl₄-haltigen Gasstrom unter Zusatz von Sauerstoff und/oder Luft bei einer Temperatur oberhalb 1000 °C umsetzt, dabei erhaltene pyrogene Kieselsäure aus dem resultierenden Gasstrom abtrennt und die verbliebene Gasphase der Einheit (D) zuführt.

In Einheit (D) des erfindungsgemäßen Verfahrens kann nun vorteilhaft das im Gasstrom befindliche HCl in Gegenwart und/oder unter Zufuhr von Sauerstoff bzw. Luft und Erhitzen des Gasstroms katalytisch zu Cl₂ oxidiert werden, wobei man als Katalysator CuCl₂ (gemäß Decon-Verfahren) oder IrO₂, RhO₂ und/oder RuO₂ beispielsweise geträgert auf TiO₂ einsetzt. Die katalytische Umsetzung bzw. Oxidation in Einheit (D) führt man beispielsweise bei einer Temperatur im Bereich von 350 bis 1500 °C, bevorzugt von 500 bis 1300 °C, besonders vorzugsweise von 800 bis 1300 °C, insbesondere bei 900 bis 1100 °C, durch.
So in Einheit (D) zurückgewonnenes Cl₂ kann in einfacher und wirtschaftlicher Weise wieder in den Prozess, d.h. in Einheit (A) vorteilhaft recycliert werden.

Darüber hinaus kann man optional das Chlorgas des Gasstroms aus der Einheit (D) zusätzlich anreichern, z.B. gemäß WO 2007/134716 oder mittels Membrantechnologie, bevor man es der Einheit (A) wieder zuführt. Daher kann man beim erfindungsgemäßen Verfahren das im Gasstrom aus in Einheit (D) befindliche Cl₂ optional in einem Zwischenschritt anreichern bzw. aufkonzentrieren und nachfolgende in die Einheit (A) recyclieren.

So kann man im Rahmen des vorliegenden erfindungsgemäßen Verfahrens in wirtschaftlicher Weise SiCl₄ herstellen, das im Wesentlichen frei von Wasserstoff ist und die im Rahmen des erfindungsgemäßen Verfahrens anfallenden Cl-haltigen Komponenten im vorliegenden SiCl₄-Herstellprozess vorteilhaft nutzen.

## Patentansprüche

1. Verfahren zur Herstellung von Siliciumtetrachlorid im Anlagenverbund indem man
- in der Einheit (A) SiO₂ und Kohlenstoff mit Cl₂ bei einer Temperatur im Bereich von 700 bis 1600 °C umsetzt und das Umsetzungsprodukt fraktioniert kondensiert und SiCl₄ gewinnt,
- in der Einheit (B) das Chlorsilane-Gemisch mit einem Alkohol, vorzugsweise Methanol oder Ethanol, umsetzt (verestert), und dabei freigesetztes HCl(g) zumindest anteilig in Einheit (A) zurückführt,
- in Einheit (C) Chlorsilane-Gemisch mindestens unter Zusatz von Sauerstoff und/oder Luft verbrennt und Chlor-haltiges Gas in Einheit (A) zurückführt,
- in Einheit (D) die in den Einheiten (A), (B) und (C) anfallenden HCl-haltigen Gas- bzw. Abgasströme in Gegenwart eines Oxidationskatalysators unter Zusatz von Sauerstoff und/oder Luft einem Oxidationsschritt unterzieht, dabei Cl₂ gewinnt und das gewonnene Cl₂ zumindest anteilig in die Einheit (A) zurückführt.

2. Verfahren nach Anspruch 1, **dadurch gekennzeichnet, dass** man in Einheit (A) als Kohlenstoff Koks, Steinkohle, Braunkohle, Holzkohle, Aktivkohle und/oder Ruß einsetzt.

3. Verfahren nach Anspruch 1 oder 2, **dadurch gekennzeichnet, dass** man in Einheit (A) als SiO₂ natürlichen oder synthetischen Quarz, Quarzglas, Quarzsand und/oder Kieselsäure einsetzt.

4. Verfahren nach einem der vorangehenden Ansprüche, **dadurch gekennzeichnet, dass** man die Umsetzung gemäß Einheit (A) in einem Drehrohrofen, einem Schachtofen oder einer Wirbelschicht durchführt.

5. Verfahren nach einem der vorangehenden Ansprüche, **dadurch gekennzeichnet, dass** man in Einheit (A) die Umsetzung bei einer Temperatur im Bereich von 800 bis 1500 °C, insbesondere bei 900 bis 1300 °C, durchführt.

6. Verfahren nach einem der vorangehenden Ansprüche, **dadurch gekennzeichnet, dass** man die in der Einheit (A) nach Kondensation erhaltene SiCl₄-Fraktion zumindest anteilig in die Einheit (B) und/oder die Einheit (C) überführt, wobei man die SiCl₄-Fraktion vor einer Weiterverarbeitung optional durch mindestens eine zusätzliche Destillation nachbehandeln kann.

7. Verfahren nach einem der vorangehenden Ansprüche, **dadurch gekennzeichnet, dass** man in Einheit (B) SiCl₄ mit einem Alkohol, vorzugsweise Ethanol, umsetzt (verestert), das Produktgemisch destilliert, Tetraethoxysilan gewinnt, Ethanol optional recycliert, HCl über die Gasphase aus dem System entfernt und der Einheit (D) zuführt.

8. Verfahren nach einem der vorangehenden Ansprüche, **dadurch gekennzeichnet, dass** man in Einheit (C) einen SiCl₄-haltigen Gasstrom unter Zusatz von Sauerstoff und/oder Luft bei einer Temperatur oberhalb 1000 °C umsetzt, dabei erhaltene pyrogene Kieselsäure aus dem resultierenden Gasstrom abtrennt und die verbliebene Gasphase der Einheit (D) zuführt.

9. Verfahren nach einem der vorangehenden Ansprüche, **dadurch gekennzeichnet, dass** man in Einheit (D) als Katalysator CuCl₂ (gemäß Decon-Verfahren) oder IrO₂, RhO₂ und/oder RuO₂ beispielsweise geträgert auf TiO₂ einsetzt.

10. Verfahren nach einem der vorangehenden Ansprüche, **dadurch gekennzeichnet, dass** man das im Gasstrom aus in Einheit (D) befindliche Cl₂ optional in einem Zwischenschritt anreichert und nachfolgende in die Einheit (A) recycliert.
